# EUROPÄISCHE PATENTANMELDUNG

(11) **EP 3 323 292 A1**
(43) Veröffentlichungstag der Anmeldung: **23.05.2018**
(21) Anmeldenummer: 16455006.3
(22) Anmeldetag: 22.11.2016
(51) Int. Cl.: A21B 5/02, A21B 1/26, A21B 1/42

(54) **BACKVORRICHTUNG MIT EINER GEKÜHLTEN LÄNGSSTREBE**

(71) Anmelder: Haas Food Equipment GmbH, 1210 Wien (AT)
(72) Erfinder: Sachsenhofer, Johann, 1220 Wien (AT); Süß, Daniel, 3430 Tulln an der Donau (AT); Jiraschek, Stefan, 2202 Königsbrunn (AT)
(74) Vertreter: Puchberger & Partner Patentanwälte

(57) **Zusammenfassung**

Die Erfindung betrifft eine Backvorrichtung (1) zum Herstellen gebackener Produkte, wobei die Backvorrichtung (1) ein Backvorrichtungsgestell (21), ein Backvorrichtungsgehäuse (20) und einen Backraum (2) umfasst, wobei die Backvorrichtung (1) eine Backzangenkette (3) besitzt, wobei die Backzangenkette (3) Backzangenwagen (7) mit Backzangen (8) umfasst, wobei an der Backzangenkette (3) Rollen (9) vorgesehen sind, wobei die Rollen (9) zur Abstützung/Führung der Backzangenkette (3) an mindestens einer Längsstrebe (10) abrollen, wobei zur Kühlung der Längsstrebe (10) ein mit Kühlluft durchströmter Kühlkanal (11) vorgesehen ist, wobei der Kühlkanal (11) im Bereich des hinteren Umlenkpunktes (6) durch mindestens eine Konvektionsöffnung (12) in den Backraum (2) mündet, wobei ein Konvektionsgebläse (25) zur Erzeugung einer Konvektionsströmung im Backraum (2) und zur Förderung der Kühlluft durch den Kühlkanal (11) vorgesehen ist, sodass die Kühlluft durch die Konvektionsöffnung (12) aus dem Kühlkanal (11) der mindestens einen Längsstrebe (10) zur Erzeugung einer künstlichen Konvektion, insbesondere horizontal, durch den Backraum (2) strömt.

## Beschreibung

Die Erfindung betrifft eine Backvorrichtung gemäß dem Oberbegriff des unabhängigen Patentanspruchs.

Aus dem Stand der Technik ist eine Vielzahl von Backvorrichtungen zum Herstellen gebackener Produkte bekannt. Beispielsweise sind Backvorrichtungen mit offenen Backräumen bekannt, die Austrittsöffnungen bzw. Düsen für den Austritt eines Kühlluftstroms umfassen. Diese Düsen sind direkt dem zu kühlenden Teil der Vorrichtung zugekehrt. Dadurch können die Laufrollen, die Laufradbahnen und/oder die Seitenwandinnenseiten gekühlt werden. Nachteilig an herkömmlichen Backvorrichtungen ist, dass die Kühlvorrichtungen die Strömungsverhältnisse im Backraum negativ beeinflussen. Dies hat den Nachteil, dass keine gerichtete Strömung im Backraum erzeugt wird. Es sind aus dem Stand der Technik auch Backvorrichtungen bekannt, welche zur Kühlung der Längsstreben, an welchen die Rollen der Backzange und/oder Backzangenkette abrollen, mit flüssigen Kühlmedien durchströmte Kühlkanäle aufweisen, wobei sich diese Kühlkanäle geschlossen durch den Backraum erstrecken. Nachteilig an diesen Backvorrichtungen ist, dass das Kühlmedium nur zur Kühlung und nicht synergetisch zur Erzeugung einer künstlichen Konvektion im Backraum verwendet werden kann.

Aufgabe der Erfindung ist es nun, die Nachteile des Standes der Technik zu überwinden. Insbesondere ist es Aufgabe der Erfindung, eine Backvorrichtung zu schaffen, die effizient hergestellt und betrieben werden kann und die ferner eine verbesserte Lebensdauer aufweist.

Die erfindungsgemäße Aufgabe wird insbesondere durch die Merkmale des unabhängigen Patentanspruchs gelöst.

Durch die erfindungsgemäße Backvorrichtung ist der synergetische Effekt erzielbar, dass die Längsstreben das Backvorrichtungsgestell verstärken und/oder versteifen, dass die Kühlluft zur Kühlung der Längsstrebe und zur Erzeugung einer künstlichen Konvektion im Backraum eingesetzt werden kann, und dass die zur Erzeugung dieser künstlichen Konvektion verwendete Luft bereits vorgewärmt in den Backraum strömt.

Insbesondere ist es ein Vorteil der Erfindung, dass eine Backvorrichtung geschaffen wird, die durch Kühlkanäle gekühlte Längsstreben umfasst. Diese Längsstreben sind bevorzugt einfach aufgebaut und leicht zu fertigen. Weiters dienen die Längsstreben bevorzugt auch als Versteifung und/oder Verstärkung des Backvorrichtungsgestells der Backvorrichtung. Ferner sollen die Längsstreben bevorzugt einfach und schnell am Backvorrichtungsgestell befestigbar sein.

Die Erfindung betrifft eine Backvorrichtung zum Herstellen gebackener, bevorzugt essbarer, Produkte, wobei die Backvorrichtung ein Backvorrichtungsgestell mit einem Backvorrichtungsgehäuse und einen innerhalb des Backvorrichtungsgehäuses angeordneten Backraum umfasst, wobei die Backvorrichtung eine längs einer in sich geschlossenen Umlaufbahn kontinuierlich umlaufende und sich durch den Backraum bewegende endlose Backzangenkette besitzt, die sich von einem in einem Vorkopf angeordneten vorderen Umlenkpunkt bis zu einem hinteren Umlenkpunkt erstreckt, wobei die Backzangenkette miteinander gekoppelte Backzangenwagen mit auf- und zumachbaren, insbesondere auf- und zuklappbaren, Backzangen umfasst, wobei an der Backzangenkette mehrere Rollen vorgesehen sind, wobei die Rollen zur Abstützung und/oder Führung der Backzangenkette zumindest entlang eines Teils der Umlaufbahn an mindestens einer Längsstrebe abrollen, wobei zur Kühlung der mindestens einen Längsstrebe ein mit Kühlluft durchströmter Kühlkanal vorgesehen ist.

Gegebenenfalls ist vorgesehen, dass der Kühlkanal im Bereich des hinteren Umlenkpunktes durch mindestens eine Konvektionsöffnung in den Backraum mündet, dass ein Gebläse zur Erzeugung einer Konvektionsströmung im Backraum und zur Förderung der Kühlluft durch den Kühlkanal vorgesehen ist, sodass die Kühlluft durch die Konvektionsöffnung aus dem Kühlkanal der mindestens einen Längsstrebe zur Erzeugung einer künstlichen Konvektion, insbesondere horizontal, durch den Backraum strömt.

Durch die erfindungsgemäße Backvorrichtung ist es möglich, die Kühlluft, welche durch den Kühlkanal strömt, zur Erzeugung einer künstlichen Konvektion in dem Backraum einzusetzen. Erfindungsgemäß ist vorgesehen, dass die durch ein Gebläse eingebrachte Kühlluft im Bereich des hinteren Umlenkpunktes durch mindestens eine Konvektionsöffnung des Kühlkanals in den Backraum mündet. Die im Backraum austretende Kühlluft vermischt sich mit den Backraumgasen und strömt mit diesen durch den Backraum, insbesondere vom hinteren Umlenkpunkt bis zum Vorkopf oder bis zum Abzug der Backvorrichtung. Dadurch werden die Backraumgase und die Kühlluft im ganzen Backraum durchmischt und die Kühlluft erzeugt eine künstliche Konvektion im Backraum. Beim Betrieb der Backvorrichtung, insbesondere bei der Beheizung des Backraums, wird die durch den Kühlkanal strömende Kühlluft erwärmt. In diesem Fall wirkt der Kühlkanal als Wärmetauscher und erwärmt die Kühlluft. Dadurch ist es gegebenenfalls möglich, die notwendige Leistung des in herkömmlichen Backvorrichtungen verwendeten Heckluftgebläses zu reduzieren. Andererseits wird durch die synergetische Vorwärmung der zur Konvektion verwendeten Kühlluft der Energieverbrauch der Backvorrichtung gesenkt. Dadurch ist es möglich, die Backvorrichtung effizienter, insbesondere energieeffizienter, zu betreiben. Ferner wird durch die Kühlung der Längsstreben die Lebensdauer der Rollen und/oder der Lager der Rollen erhöht, da durch die Kühlung die Temperatur der Rollen und/oder der Lager der Rollen um bis zu 30 °C gesenkt wird. Darüber hinaus wird das bei herkömmlichen Backvorrichtungen oft auftretende Überhitzen der Rollen und/oder der Lager der Rollen verhindert, das insbesondere im Energiesparmodus der Backvorrichtungen auftritt.

Gegebenenfalls ist vorgesehen, dass sich der Kühlkanal bis zur Konvektionsöffnung, insbesondere backraumseitig, geschlossen durch den Backraum erstreckt.

Dadurch ist es möglich, die Kühlluft in einem definierten Bereich, insbesondere im Bereich des hinteren Umlenkpunktes, aus dem Kühlkanal austreten zu lassen. Aus dem Kühlkanal kann somit gegebenenfalls die Kühlluft ausschließlich aus den Konvektionsöffnungen austreten. Die Konvektionsöffnungen sind gegebenenfalls im Bereich des hinteren Umlenkpunktes vorgesehen und gegebenenfalls weist der Kühlkanal keine weiteren Öffnungen auf durch die Kühlluft in den Backraum strömen kann. Insbesondere durch diesen definierten Austrittspunkt wird eine künstliche Konvektion der Konvektionsöffnung erzeugt, welche, insbesondere horizontal, durch den Backraum strömt und eine optimierte Durchmischung im Backraum ermöglicht.

Gegebenenfalls ist vorgesehen, dass das Konvektionsgebläse die Kühlluft durch mindestens eine Einblasöffnungen in den Kühlkanal einbringt, dass die mindestens eine Einblasöffnung oder mindestens eine Einblasöffnung beabstandet von der Konvektionsöffnung vorgesehen ist, und/oder dass die mindestens eine Einblasöffnung oder mindestens eine Einblasöffnung im Bereich des vorderen Umlenkpunktes vorgesehen ist, und/oder dass die mindestens eine Einblasöffnung oder mindestens eine Einblasöffnung im Bereich des Vorkopfes vorgesehen ist, und/oder dass die mindestens eine Einblasöffnung oder mindestens eine Einblasöffnung im Bereich einer Abzugsöffnung vorgesehen ist, und/oder dass die mindestens eine Einblasöffnung oder mindestens eine Einblasöffnung im Bereich einer Trennwand zwischen Vorkopf und dem Backraum vorgesehen ist, und/oder dass die mindestens eine Einblasöffnung oder mindestens eine Einblasöffnung im Bereich des Backraums vorgesehen ist.

Da die Kühlluft gegebenenfalls beabstandet von der Konvektionsöffnung durch die Einblasöffnung in den Kühlkanal eingebracht wird, ist es möglich die Längsstreben, insbesondere über ihre gesamte Länge, zu kühlen. Bevorzugt kann vorgesehen sein, dass der im Backraum vorgesehene Teil der Längsstrebe gekühlt wird. Hierfür kann gegebenenfalls vorgesehen sein, dass die in den Kühlkanal eingebrachte Kühlluft nur durch den Teil der Längsstrebe strömt, welcher im Backraum angeordnet ist. Ferner wird dadurch gegebenenfalls eine Erwärmung der Kühlluft ermöglicht. Es ist gegebenenfalls vorgesehen mehrere Einblasöffnungen an dem Kühlkanal anzuordnen. Dadurch ist es gegebenenfalls möglich an verschiedenen Stellen Kühlluft in den Kühlkanal einzubringen. Bevorzugt ist vorgesehen die mindestens eine Einblasöffnung im Bereich des Vorkopfes oder knapp hinter dem Ofenkopf anzuordnen.

Gegebenenfalls ist vorgesehen, dass die Längsstrebe ein Hohlprofil umfasst, wobei der Kühlkanal im Hohlprofil angeordnet ist oder der Kühlkanal durch den Innenraum des Hohlprofils gebildet ist.

Durch diese Ausbildung ist es möglich, den Kühlkanal an der Längsstrebe anzuordnen oder in die Längsstrebe zu integrieren. Durch die Verwendung von Hohlprofilen ist eine effiziente und einfache Herstellung der Längsstreben möglich.

Gegebenenfalls ist vorgesehen, dass der Backraum mit Ausnahme folgender Öffnungen im Wesentlichen geschlossen ausgebildet ist: eine Abzugsöffnung zur Ableitung der gasförmigen Medien, insbesondere der Verbrennungsgase und der Luft, aus dem Backraum, eine oder mehrere Zuführungsöffnungen für das Brenngemisch, eine Eintrittsöffnung für die Backzangenkette, eine Austrittsöffnung für die Backzangenkette und mindestens eine Konvektionsöffnung.

An der Abzugsöffnung zur Ableitung der gasförmigen Medien kann gegebenenfalls ein Abzug vorgesehen sein. Das Brenngemisch besteht insbesondere aus Primärsauerstoff und Brennstoff. Gegebenenfalls kann vorgesehen sein, dass die Backvorrichtung nur mindestens eine Konvektionsöffnung umfasst, welche die Kühlluft aus dem Kühlkanal der mindestens einen Längsstrebe zur Erzeugung einer künstlichen Konvektion horizontal durch den Backraum strömen lässt. Gegebenenfalls kann aber auch vorgesehen sein, dass die Backvorrichtung mindestens eine Konvektionsöffnung umfasst, welche als Zuführöffnung für einen Konvektionsgasstrom eines weiteren Konvektionsgebläses zur Verbesserung der künstlichen Konvektion im Backraum umfasst. Dieser Konvektionsgasstrom kann gasförmige Medien, insbesondere Luft und/oder rezirkuliertes Backraumgas, umfassen. Somit ist es möglich, zur Erzeugung einer künstlichen Konvektion Kühlluft aus der Konvektionsöffnung eines Kühlkanals der mindestens einen Längsstrebe und/oder einen Konvektionsgasstrom durch eine als Zuführöffnung für ein weiteres Konvektionsgebläse ausgebildete Konvektionsöffnung zuzuführen. Durch die geschlossene Ausbildung der Backvorrichtung soll ermöglicht werden, dass keine Umgebungsluft oder Umgebungsluft nur in geringer Menge in den Backraum gelangt.

Gegebenenfalls ist vorgesehen, dass das Konvektionsgebläse zur Einblasung der zur Kühlung des Kühlkanals verwendeten Kühlluft, insbesondere durch die Einblasöffnung, vorgesehen ist, über das gesteuert und/oder geregelt Kühlluft zur Erzeugung künstlicher Konvektion in den Backraum einbringbar ist, wobei die Kühlluft über Einblasöffnungen in den Kühlkanal eingebracht oder einbringbar ist.

Durch das Konvektionsgebläse ist es möglich, die künstliche Konvektion im Backraum durch die Steuerung und/oder die Regelung des Konvektionsgebläses zu steuern und/oder zu regeln. Dadurch kann gegebenenfalls die in den Kühlkanal eingebrachte Kühlluft und somit die aus dem Kühlkanal durch die Konvektionsöffnung austretende Kühlluft gesteuert und/oder geregelt werden.

Gegebenenfalls ist vorgesehen, dass die Strömungsrichtung der aus der mindestens einen Konvektionsöffnung des Kühlkanals der mindestens einen Längsstrebe austretenden Kühlluft gegen die Strömungsrichtung der in dem Kühlkanal strömenden Kühlluft verläuft.

Dadurch, dass die Strömungsrichtung insbesondere gegen die Strömungsrichtung der in dem Kühlkanal strömenden Kühlluft verläuft, wird die Konvektion, insbesondere die Mitführung der Wärme, und die Durchmischung der Backraumgase verbessert. Gegebenenfalls ist vorgesehen, dass die Strömungsrichtung der austretenden Kühlluft gegen die Richtung der Hauptbewegungsrichtung der Backzangen der oberen oder unteren Transportebene und insbesondere waagrecht verläuft.

Gegebenenfalls ist vorgesehen, dass die Längsstrebe als Vertikalführungsschiene für Laufrollen und/oder dass die Längsstrebe als Seitenführungsleiste für Seitenführungsrollen ausgebildet ist oder sind.

Dadurch können die als Vertikalführungsschienen für die Laufrollen und/oder die als Seitenführungsleisten für die Seitenführungsrollen ausgebildeten Längsstreben gekühlt werden.

Gegebenenfalls ist vorgesehen, dass die mindestens eine Längsstrebe eine als Lauffläche für die Rollen wirkende Laufschiene umfasst.

Durch die Laufschiene, welche als Lauffläche für die Rollen wirkt, ist es möglich, die nicht mit den Rollen in Berührung kommenden Teile aus günstigen und widerstandsunfähigeren Materialien herzustellen. Bevorzugt ist nur die Laufschiene gegebenenfalls aus einem hochwertigen Material, insbesondere einem hochfesten Stahl, besonders bevorzugt aus DIN 174 1.1221 Ck 60, welcher gehärtet und angelassen ist, hergestellt. Die Längsstrebe kann gegebenenfalls aus DIN 2395 St 44-3 gebildet sein. Durch die Kühlung der Längstrebe kann die von der Längstrebe umfasste Laufschiene gekühlt werden.

Gegebenenfalls ist vorgesehen, dass die mindestens eine Längsstrebe am Backvorrichtungsgestell angeordnet ist, und/oder dass die mindestens eine Längsstrebe ein Teil des Backvorrichtungsgestells ist.

Bevorzugt verstärken und/oder versteifen die Längsstreben, welche am Backvorrichtungsgestell angeordnet und/oder ein Teil des Backvorrichtungsgestells sind, die Backvorrichtung. Dadurch ist es möglich, teilweise auf andere die Backvorrichtung verstärkende und/oder versteifende Teile zu verzichten. Dadurch ist die Backvorrichtung kosteneffizienter und einfacher herzustellen.

Gegebenenfalls ist vorgesehen, dass zur Verbindung der Längsstrebe mit einem Teil des Backvorrichtungsgestells eine erste Befestigungseinrichtung vorgesehen ist, wobei die Befestigungseinrichtung einen Fortsatz und eine Freistellung zur Befestigung des Fortsatzes umfasst.

Durch diese Merkmale ist es möglich, die Längsstreben einfach und effizient an der Backvorrichtung zu befestigen. Dadurch werden der Zeitaufwand sowie das Risiko eines Fehlers bei der Fertigung im Gegensatz zu herkömmlichen Backvorrichtungen deutlich reduziert. Insbesondere werden bei herkömmlichen Backvorrichtungen die Längsstreben mit dem Backvorrichtungsgestell verschweißt. Diese herkömmliche Befestigung der, insbesondere als L-Profile ausgeführten, Längsstreben ist sehr zeitaufwändig und fehleranfällig, da die Längsstreben insbesondere vor Ort punktgenau ausgerichtet und verschweißt werden. Da solch eine herkömmliche Verschweißung bei der Backvorrichtung nicht notwendig ist, ist es möglich, die Produktionskosten als auch die Montagezeit bei der Backvorrichtung wesentlich zu senken.

Gegebenenfalls ist vorgesehen, dass das Backvorrichtungsgestell, insbesondere vertikal verlaufende, Stützen umfasst und/oder aus, insbesondere vertikal verlaufenden, Stützen gebildet ist, und dass die mindestens eine Längsstrebe über die mindestens eine Befestigungseinrichtung an diesen Stützen befestigt oder befestigbar ist.

Die Längsstreben werden bevorzugt über die Befestigungseinrichtungen, an den, insbesondere vertikal verlaufenden, Stützen des Backvorrichtungsgestells befestigt oder sind daran befestigbar. Das Backvorrichtungsgestell kann auch aus den vertikal verlaufenden Stützen gebildet sein. Insbesondere ist vorgesehen, dass in die Stützen Nuten gelasert werden, welche als Befestigungsvorrichtungen dienen. Die Gegenstücke zu den gelaserten Nuten, insbesondere die Feder des Nut-Feder-Systems, bilden die Befestigungseinrichtungen der Längsstreben. Die Laufschienen werden gemäß dieser Ausführungsform auf den Längsstreben angeordnet, insbesondere angeschraubt. Dadurch kann die Position der Längsstreben am Backvorrichtungsgestell, vor der Montage, festgelegt werden, wodurch die Montagekosten und die für die Montage notwendige Zeit wesentlich verringert werden.

Gegebenenfalls ist vorgesehen, dass die Umlaufbahn, entlang welcher die Backzangenkette umläuft, nacheinander eine obere, im Wesentlichen waagrecht verlaufende, Transportebene, einen hinteren Umlenkbereich im Bereich des hinteren Umlenkpunktes, eine untere, im Wesentlichen waagrecht verlaufende, Transportebene und einen vorderen Umlenkbereich im Bereich des vorderen Umlenkpunktes umfasst, dass die Backzangenkette im hinteren Umlenkbereich durch Umlenkung um 180° von der oberen Transportebene auf die untere Transportebene geführt ist, dass die Backzangenkette im vorderen Umlenkbereich durch Umlenkung um 180° von der unteren Transportebene wieder zurück auf die obere Transportebene geführt ist und dass die Transportebenen mindestens zwei Längsstreben umfassen oder aus mindestens zwei Längsstreben gebildet sind.

In der Backvorrichtung sind bevorzugt eine obere und eine untere Transportebene vorgesehen, welche jeweils mindestens zwei Längsstreben umfassen oder aus mindestens zwei Längsstreben gebildet sind.

Gegebenenfalls ist vorgesehen, dass die Längsstreben aus festem Metall, insbesondere Stahl, ausgeführt sind.

Die Längsstreben können weiters aus Stahl oder Edelstahl ausgebildet sein.

Gegebenenfalls ist vorgesehen, dass die Backzangen der Backzangenkette der Backvorrichtung jeweils nacheinander einen Backmassenauftragsbereich zum Auftrag einer Backmasse auf eine geöffnete Backzange, einen Schließbereich zum Schließen der Backzangen, den Backraum zum Backen der Backprodukte in den geschlossenen Backzangen, in dem mindestens eine Heizanordnung zur Beheizung der im Backraum befindlichen Backzangen vorgesehen ist, einen Öffenbereich zum Öffnen der Backzangen, und einen Backproduktentnahmebereich zur Entnahme der gebackenen Produkte aus den geöffneten Backzangen durchlaufen, wobei die Backzangenkette an einem im Backraum angeordneten hinteren Umlenkpunkt und an einem entfernt vom Backraum in einem Vorkopf angeordneten vorderen Umlenkpunkt umgelenkt sind, wobei der Backraum als im Wesentlichen geschlossener Backraum mit einer Wärmeisolierung ausgebildet ist.

Weitere erfindungsgemäße Merkmale ergeben sich aus den Ansprüchen, der Beschreibung der Ausführungsbeispiele und den Figuren.

Die Erfindung wird nun am Beispiel exemplarischer, nicht ausschließlicher, Ausführungsbeispiele näher erläutert.
Fig. 1 zeigt eine schematische Seitenansicht bzw. Schnittansicht einer ersten Ausführungsform einer erfindungsgemäßen Backvorrichtung.
Fig. 2 zeigt eine perspektivische Ansicht einer zweiten Ausführungsform einer erfindungsgemäßen Backvorrichtung.
Fig. 3 zeigt eine schematische zweidimensionale Schnittdarstellung durch eine dritte Ausführungsform einer erfindungsgemäßen Backvorrichtung.

Wenn nicht anders angegeben, so entsprechen die Bezugszeichen folgenden Komponenten:
Backvorrichtung 1, Backraum 2, Backzangenkette 3, Vorkopf 4, vorderer Umlenkpunkt 5, hinterer Umlenkpunkt 6, Backzangenwagen 7, Backzangen 8, Rollen 9, Längsstrebe 10, Kühlkanal 11, Konvektionsöffnung 12, Abzugsöffnung 13, Zuführungsöffnung 14, Eintrittsöffnung (für die Backzangenkette) 15, Austrittsöffnung (für die Backzangenkette) 16, Einblasöffnung 17, Laufschiene 18, Heizanordnung 19, Backvorrichtungsgehäuse 20, Backvorrichtungsgestell 21, Stützen 22, obere Transportebene 23, untere Transportebene 24, Konvektionsgebläse 25.

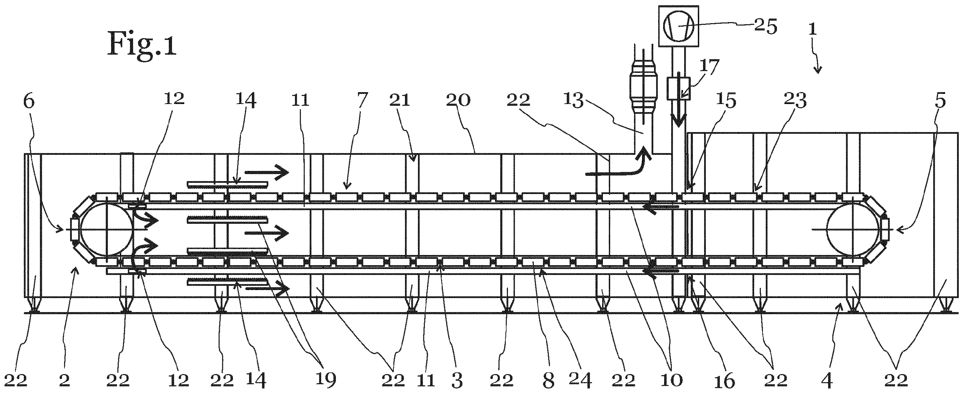

Fig. 1 zeigt eine schematische Seitenansicht bzw. Schnittansicht einer ersten Ausführungsform einer Backvorrichtung 1. Die Backvorrichtung 1 umfasst ein Backvorrichtungsgestell 21 mit einem Backvorrichtungsgehäuse 20. Innerhalb des Backvorrichtungsgehäuses 20 ist ein Backraum 2 angeordnet. Die Backvorrichtung 1 umfasst eine längs einer in sich geschlossenen Umlaufbahn kontinuierlich umlaufende und sich durch den Backraum 2 bewegende endlose Backzangenkette 3. Diese Backzangenkette 3 erstreckt sich von einem in einem Vorkopf 4 angeordneten vorderen Umlenkpunkt 5 bis zu einem hinterem Umlenkpunkt 6. Die Backzangenkette 3 umfasst miteinander gekoppelte Backzangenwagen 7 mit auf- und zumachbaren, insbesondere auf- und zuklappbaren Backzangen 8. An der Backzangenkette 3 sind mehrere Rollen 9, welche in dieser Figur nicht dargestellt sind, vorgesehen, und welche zur Abstützung und/oder Führung der Backzangenkette 3 zumindest entlang eines Teils der Umlaufbahn und an vier Längsstreben 10 abrollen.

Zur Kühlung dieser Längsstreben 10 sind mit Kühlluft durchströmte Kühlkanäle 11 vorgesehen, welche innerhalb der Längsstrebe 10 angeordnet sind. Die Kühlkanäle 11 münden im Bereich des hinteren Umlenkpunktes 6 durch jeweils eine Konvektionsöffnung 12 in den Backraum 2. In dieser Ausführungsform sind vier Konvektionsöffnungen 12 im Bereich des hinteren Umlenkpunktes 6 vorgesehen. Ferner ist in dieser Ausführungsform ein Gebläse 25 zur Erzeugung einer Konvektionsströmung im Backraum 2 und zur Förderung der Kühlluft durch die Kühlkanäle 11 vorgesehen. Die Kühlluft wird von dem Konvektionsgebläse 25 durch die Einblasöffnungen 17 in den Kühlkanal 11 eingebracht. Die Einblasöffnungen 17 sind beabstandet von den Konvektionsöffnungen 12 angeordnet. In dieser Ausführungsform sind die Einblasöffnungen 17 in der Nähe der Trennwand zwischen Vorkopf 4 und dem Backraum 2 und im Bereich einer Abzugsöffnung 13 angeordnet. In einer weiteren, nicht dargestellten Ausführungsform, können die Einblasöffnungen 17 auch in der Nähe des vorderen Umlenkpunktes 5 und/oder im Bereich des Vorkopfes 4 und/oder im Bereich der Abzugsöffnung 13 und/oder im Bereich des Backraums 2 angeordnet sein. Das Gebläse 25 bringt die Kühlluft in dieser Ausführungsform über eine Stütze 22 des Backvorrichtungsgestelles 21 im Bereich der Trennwand zwischen Vorkopf 4 und dem Backraum 2 in die Einblasöffnungen 17 der Kühlkanäle 11 ein. In einer nicht dargestellten Ausführungsform bringt das Gebläse 25 die Kühlluft in der Nähe des vorderen Umlenkpunktes 5 und/oder im Bereich des Vorkopfes 4 und/oder im Bereich der Abzugsöffnung 13 und/oder im Bereich des Backraums 2 in die Einblasöffnungen 17 der Kühlkanäle 11 ein. Die Kühlluft, welche durch die Konvektionsöffnungen 12 aus den Kühlkanälen 11 der Längsstreben 10 austritt, dient zusätzlich der Erzeugung einer künstlichen Konvektion, und strömt, insbesondere horizontal, durch den Backraum 2. In dieser Ausführungsform ist vorgesehen, dass sich die Kühlkanäle 11 im Wesentlichen backraumseitig geschlossen bis zu deren Konvektionsöffnung 12 im Bereich des hinteren Umlenkpunkts 6 durch den Backraum 2 erstrecken. Das bedeutet insbesondere, dass die in die Kühlkanäle 11 eingebrachte Kühlluft nur aus den Konvektionsöffnungen 12 aus den Kühlkanälen 11 in den Backraum 2 strömen kann. Dadurch wirken die Kühlkanäle 11 als Wärmetauscher und die Kühlluft kann als vorgewärmte Konvektionsluft in den Backraum 2 eintreten. Durch diesen synergetischen Effekt der Backvorrichtung 1 wird der Energieverbrauch der Backvorrichtung 1 gesenkt. Dadurch ist es möglich, die Backvorrichtung 1 effizienter, insbesondere energieeffizienter, zu betreiben. Ferner wird durch die Kühlung mit Kühlluft auch die Temperatur der Längsstreben 10 um bis zu 30 °C gesenkt. Dadurch ist es möglich, mit der Backvorrichtung 1 die Lebensdauer der nicht dargestellten Rollen 9 und/oder deren Lager zu erhöhen. Durch diese synergetischen Effekte ist die Backvorrichtung 1 effizienter zu betreiben und weist ferner eine höhere Lebensdauer auf.

In dieser Ausführungsform ist der Backraum 2 der Backvorrichtung 1 im Wesentlichen geschlossen ausgebildet. Der Backraum 2 der Backvorrichtung 1 dieser ersten Ausführungsform weist eine Abzugsöffnung 13 zur Ableitung der gasförmigen Medien, insbesondere der Verbrennungsgase und der Luft aus dem Backraum 2, mehrere Zuführungsöffnungen 14 für das Brenngemisch, eine Eintrittsöffnung 15 für die Backzangenkette 3, eine Austrittsöffnung 16 für die Backzangenkette 3, und in dieser Ausführungsform vier Konvektionsöffnungen 12 auf. Das Konvektionsgebläse 25 ist zur Einblasung der zur Kühlung den Kühlkanal 11 durchströmenden Kühlluft durch die Einblasöffnungen 17 in die Kühlkanäle 11 vorgesehen. Über das Konvektionsgebläse 25 ist Kühlluft zur Erzeugung künstlicher Konvektion in den Backraum 2 gesteuert und/oder geregelt einbringbar. Die Strömungsrichtung der aus den Konvektionsöffnungen 12 der Kühlkanäle 11 der Längsstreben 10 austretenden Kühlluft verläuft gegen die Strömungsrichtung der in den Kühlkanälen 11 strömenden Kühlluft. Dadurch kann der Wärmeübergang zu den Kühlkanälen 11 verbessert werden. In dieser ersten Ausführungsform der Backvorrichtung 1 verläuft die Strömungsrichtung der austretenden Kühlluft auch gegen die Hauptbewegungsrichtung der Backzangen 8 der oberen Transportebene 23 und insbesondere waagrecht.

In der Ausführungsform der Fig. 1 sind die Längsstreben 10 am Backvorrichtungsgestell 21 angeordnet. Das Backvorrichtungsgestell 21 umfasst vertikal verlaufende Stützen 22. Die Längsstreben 10 sind über Befestigungseinrichtungen an diesen Stützen 22 des Backvorrichtungsgestells 21 befestigt oder befestigbar. Dadurch sind die Längsstreben 10 einfach und schnell an der Backvorrichtung 1, insbesondere am Backvorrichtungsgestell 21, anordenbar oder anbringbar. Die Längsstreben 10 wirken in dieser Ausführungsform der Backvorrichtung 1 auch als Verstärkung und/oder Versteifung des Backvorrichtungsgestells 21 und der Backvorrichtung 1.

In dieser Ausführungsform durchläuft die Backzangenkette 3 entlang ihrer Umlaufbahn nacheinander eine obere, im Wesentlichen waagrecht verlaufende, Transportebene 23, einen hinteren Umlenkbereich im Bereich des hinteren Umlenkpunktes 6, eine untere, im Wesentlichen waagrecht verlaufende, Transportebene 24, und einen vorderen Umlenkbereich im Bereich des vorderen Umlenkpunktes 5. Die Backzangenkette 3 wird im hinteren Umlenkbereich durch Umlenkung um 180° von der oberen Transportebene 23 auf die untere Transportebene 24 geführt. Die Backzangenkette 3 wird im vorderen Umlenkbereich durch Umlenkung um 180° von der unteren Transportebene 24 wieder zurück auf die obere Transportebene 23 geführt. In dieser Ausführungsform umfassen die Transportebenen 23 und 24 jeweils zwei Längsstreben 10. In dieser Ausführungsform sind die Längsstreben 10 aus festem Metall, insbesondere aus Stahl, ausgeführt.

Die Backzangen 8 der Backzangenkette 3 der Backvorrichtung 1 durchlaufen jeweils nacheinander einen Backmassenauftragsbereich zum Auftragen einer Backmasse auf eine geöffnete Backzange 8, einen Schließbereich zum Schließen der Backzange 8, den Backraum 2 zum Backen der Backprodukte in den geschlossenen Backzangen 8, einen Öffenbereich zum Öffnen der Backzangen 8 und einen Backproduktentnahmebereich zur Entnahme der gebackenen Produkte aus den geöffneten Backzangen 8. Im Backraum 2 sind Heizanordnungen 19 zur Beheizung des Backraums 2 bzw. der im Backraum 2 befindlichen Backzangen 8 vorgesehen.

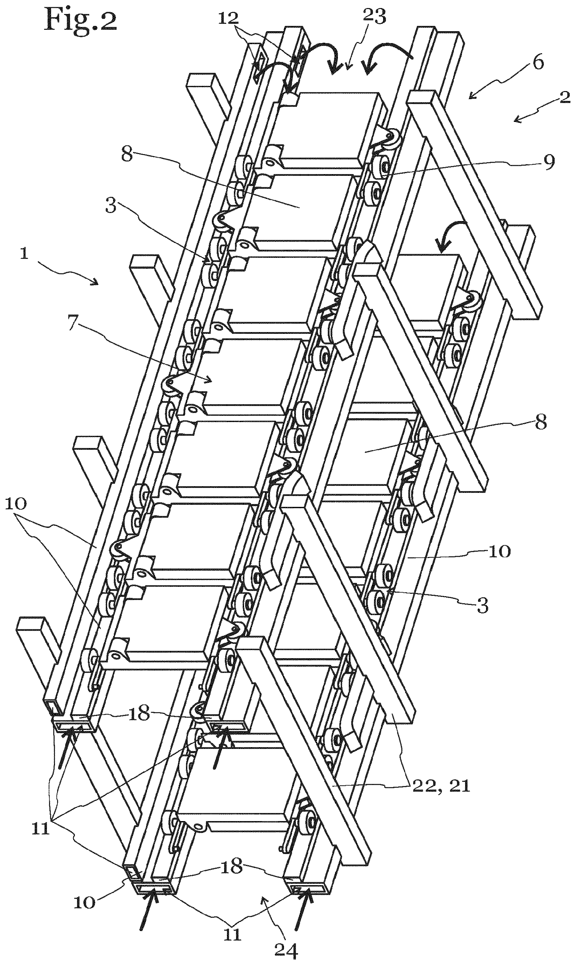

Fig. 2 zeigt eine perspektivische Ansicht einer zweiten Ausführungsform einer Backvorrichtung 1, wobei die Konstruktion der Fig. 2 auch ein Teil der Konstruktion der Fig. 1 sein kann. In dieser Figur sind die obere Transportebene 23 und die untere Transportebene 24 der Backvorrichtung 1 perspektivisch dargestellt. Die Backvorrichtung 1 besitzt eine längs einer in sich geschlossenen Umlaufbahn kontinuierlich umlaufende und sich durch den Backraum 2 bewegende endlose Backzangenkette 3. Die Backzangenkette 3 umfasst miteinander gekoppelte Backzangenwagen 7 mit auf- und zumachbaren, insbesondere auf- und zuklappbaren, Backzangen 8. An der Backzangenkette 3 sind mehrere Rollen 9 vorgesehen, welche zur Abstützung und/oder Führung der Backzangenkette 3 zumindest entlang eines Teils der Umlaufbahn an mindestens einer Längsstrebe 10 abrollen. In dieser Ausführungsform sind die Längsstreben 10 als Vertikalführungsschienen für die Laufrollen und auch als Seitenführungsleisten für die Seitenführungsrollen ausgebildet.

Gemäß einer alternativen Ausführungsform können die Seitenführungsleisten auch entfallen.

Zur Kühlung der Längsstreben 10 sind mit Kühlluft durchströmte Kühlkanäle 11 vorgesehen. Die Kühlkanäle 11 münden im Bereich des hinteren Umlenkpunktes 6 durch Konvektionsöffnungen 12 in den Backraum 2. Die durch die Konvektionsöffnungen 12 aus den Kühlkanälen 11 der Längsstreben 10 austretende Kühlluft dient der Erzeugung einer künstlichen Konvektion, welche, insbesondere horizontal, durch den Backraum 2 strömt. In dieser Ausführungsform ist vorgesehen, dass sich die Kühlkanäle 11 bis zu den Konvektionsöffnungen 12, insbesondere backraumseitig, geschlossen durch den Backraum 2 erstrecken. Ferner ist vorgesehen, dass die Längsstreben 10 Hohlprofile umfassen, wobei die Kühlkanäle 11 durch den Innenraum des Hohlprofils gebildet sind. Dadurch sind die Längsstreben 10 in dieser Ausführungsform der Backvorrichtung 1 einfach und kosteneffizient herstellbar.

Die Strömungsrichtung der aus den Konvektionsöffnungen 12 der Kühlkanäle 11 der Längsstreben 10 austretenden Kühlluft im Backraum verläuft gegen die Strömungsrichtung der in den Kühlkanälen 11 strömenden Kühlluft. Die Längsstreben 10 umfassen als Lauffläche für die Rollen 9 wirkende Laufschienen 18. Durch die Kühlung der Längsstreben 10 werden auch die daran angeordneten Laufschienen 18 gekühlt. Die Längsstreben 10 sind am Backvorrichtungsgestell 21 angeordnet. Zur Verbindung der Längsstreben 10 mit einem Teil des Backvorrichtungsgestells 21 ist eine erste Befestigungsvorrichtung vorgesehen. Diese Befestigungsvorrichtung umfasst in dieser Ausführungsform einen Fortsatz und eine Freistellung zur Befestigung des Fortsatzes. Das Backvorrichtungsgestell 21 umfasst vertikal verlaufende Stützen 22. Die Längsstreben 10 sind über die Befestigungsvorrichtung an diesen Stützen 22 befestigt. Dadurch sind die Längsstreben 10 einfach und schnell an der Backvorrichtung 1, insbesondere am Backvorrichtungsgestell 21, anordenbar oder anbringbar. Die Längsstreben 10 dienen in dieser Ausführungsform der Backvorrichtung 1 auch als Verstärkung und/oder Versteifung des Backvorrichtungsgestells 21 und damit der Backvorrichtung 1.

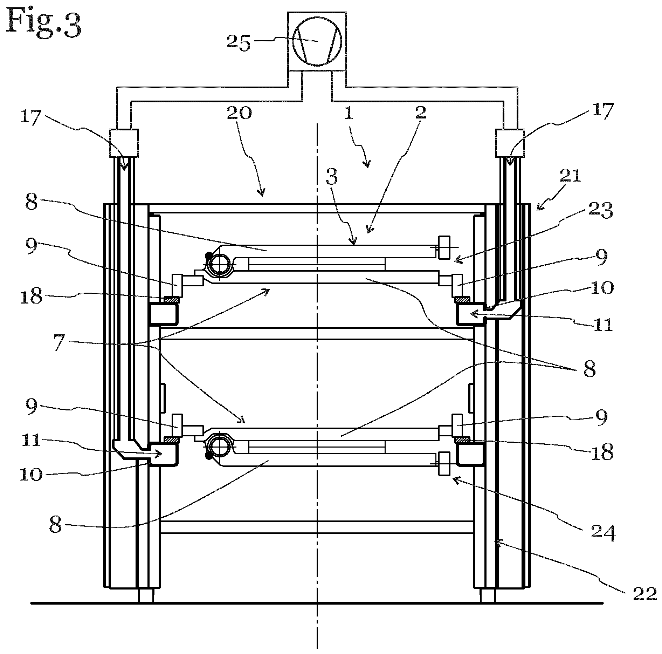

Fig. 3 zeigt eine schematische zweidimensionale Schnittdarstellung durch eine dritte Ausführungsform einer Backvorrichtung 1, wobei die Konstruktion der Fig. 3 auch ein Teil der Konstruktionen der Fig. 1 und/oder der Fig. 2 sein kann. Die Backvorrichtung 1 umfasst ein Backvorrichtungsgehäuse 20 und ein Backvorrichtungsgestell 21. Die Längsstreben 10 sind an vertikal verlaufenden Stützen 22 des Backvorrichtungsgestells 21 angeordnet. Im Backraum 2 der Backvorrichtung 1 ist eine längs einer in sich geschlossenen Umlaufbahn kontinuierlich umlaufende und sich durch den Backraum 2 bewegende endlose Backzangenkette 3 vorgesehen. Die Backzangenkette 3 umfasst miteinander gekoppelte Backzangenwagen 7 mit auf- und zumachbaren, insbesondere auf- und zuklappbaren, Backzangen 8. An der Backzangenkette 3 sind mehrere Rollen 9 vorgesehen. Die Rollen 9 dienen der Abstützung und/oder der Führung der Backzangenkette 3 und rollen zumindest entlang eines Teils der Umlaufbahn an den vier Längsstreben 10 ab. Zur Kühlung der Längsstreben 10 ist ein mit Kühlluft durchströmter Kühlkanal 11 vorgesehen. Das Konvektionsgebläse 25 dient der Einblasung der zur Kühlung des Kühlkanals 11 benötigten Kühlluft. Die Kühlluft wird von dem Konvektionsgebläse 25 durch Einblasöffnungen 17 in die Kühlkanäle 11 eingebracht. In dieser Ausführungsform ist ein Konvektionsgebläse 25 vorgesehen, welches Kühlluft in zwei Kühlkanäle 11 einbringt. Es kann aber auch vorgesehen sein, dass ein Konvektionsgebläse 25 Kühlluft in mehr als zwei, insbesondere vier, Kühlkanäle 11 einbringt. Ferner kann in einer anderen Ausführungsform vorgesehen sein, dass jeder Kühlkanal 11 mindestens ein eigenes Konvektionsgebläse 25 aufweist. Auf den Längsstreben 10 sind Laufschienen 18 angeordnet, welche als Laufflächen für die Rollen 9 wirken. In dieser Ausführungsform ist gezeigt, dass die Einblasöffnungen 17 zur Einbringung der Kühlluft in die Kühlkanäle 11 an unterschiedlichen Positionen an der Backvorrichtung 1 angeordnet sein können. In dieser Ausführungsform ist vorgesehen, dass in zwei gegenüberliegenden Stützen 22 des Backvorrichtungsgestells 21 jeweils eine Einblasöffnung 17 für einen Kühlkanal 11 der oberen 23 und unteren Transportebene 24 angeordnet ist. Beabstandet von diesen Einblasöffnungen 17 sind in derselben Stütze 22 zwei weitere Einblasöffnungen 17 für die in dieser zweidimensionalen Schnittdarstellung noch nicht mit Einblasöffnungen 17 versehenen Kühlkanäle 11 angeordnet.

In einer nicht dargestellten Ausführungsform kann vorgesehen sein, dass die Einblasöffnungen 17 für die Kühlkanäle 11 in beabstandeten Stützen 22 des Backvorrichtungsgestells 21 angeordnet sind. Dadurch ist es gegebenenfalls möglich, die Kühlluft an unterschiedlichen Stellen der Backvorrichtung 1 in die Kühlkanäle 11 einzubringen. Ferner ist gegebenenfalls vorgesehen, dass in die Kühlkanäle 11 Kühlluft mit unterschiedlicher Temperatur eingebracht wird. In einer nicht dargestellten Ausführungsform kann vorgesehen sein, dass zur Einbringung von Kühlluft in einen Kühlkanal 11 mehrere, insbesondere voneinander beabstandete, Einblasöffnungen 17 vorgesehen sind.

In einer nicht dargestellten Ausführungsform kann vorgesehen sein, dass in die Kühlkanäle 11 der oberen 23 und unteren Transportebene 24 einer Seite jeweils durch eine gemeinsame Einblasöffnung 17 Kühlluft eingebracht wird.

## Patentansprüche

1. Backvorrichtung (1) zum Herstellen gebackener, bevorzugt essbarer, Produkte,
- wobei die Backvorrichtung (1) ein Backvorrichtungsgestell (21) mit einem Backvorrichtungsgehäuse (20) und einen innerhalb des Backvorrichtungsgehäuses (20) angeordneten Backraum (2) umfasst,
- wobei die Backvorrichtung (1) eine längs einer in sich geschlossenen Umlaufbahn kontinuierlich umlaufende und sich durch den Backraum (2) bewegende endlose Backzangenkette (3) besitzt, die sich von einem in einem Vorkopf (4) angeordneten vorderen Umlenkpunkt (5) bis zu einem hinteren Umlenkpunkt (6) erstreckt,
- wobei die Backzangenkette (3) miteinander gekoppelte Backzangenwagen (7) mit auf- und zumachbaren, insbesondere auf- und zuklappbaren, Backzangen (8) umfasst,
- wobei an der Backzangenkette (3) mehrere Rollen (9) vorgesehen sind,
- wobei die Rollen (9) zur Abstützung und/oder Führung der Backzangenkette (3) zumindest entlang eines Teils der Umlaufbahn an mindestens einer Längsstrebe (10) abrollen,
- wobei zur Kühlung der mindestens einen Längsstrebe (10) ein mit Kühlluft durchströmter Kühlkanal (11) vorgesehen ist,
**dadurch gekennzeichnet,**
- **dass** der Kühlkanal (11) im Bereich des hinteren Umlenkpunktes (6) durch mindestens eine Konvektionsöffnung (12) in den Backraum (2) mündet,
- **dass** ein Konvektionsgebläse (25) zur Erzeugung einer Konvektionsströmung im Backraum (2) und zur Förderung der Kühlluft durch den Kühlkanal (11) vorgesehen ist,
- sodass die Kühlluft durch die Konvektionsöffnung (12) aus dem Kühlkanal (11) der mindestens einen Längsstrebe (10) zur Erzeugung einer künstlichen Konvektion, insbesondere horizontal, durch den Backraum (2) strömt.

2. Backvorrichtung (1) nach Anspruch 1, **dadurch gekennzeichnet, dass** sich der Kühlkanal (11) bis zur Konvektionsöffnung (12), insbesondere backraumseitig, geschlossen durch den Backraum (2) erstreckt.

3. Backvorrichtung (1) nach Anspruch 1 oder 2, **dadurch gekennzeichnet, dass** das Konvektionsgebläse (25) die Kühlluft durch mindestens eine Einblasöffnungen (17) in den Kühlkanal (11) einbringt,
- dass die mindestens eine Einblasöffnung (17) oder mindestens eine Einblasöffnung (17) beabstandet von der Konvektionsöffnung (12) vorgesehen ist, und/oder
- dass die mindestens eine Einblasöffnung (17) oder mindestens eine Einblasöffnung (17) im Bereich des vorderen Umlenkpunktes (5) vorgesehen ist, und/oder
- dass die mindestens eine Einblasöffnung (17) oder mindestens eine Einblasöffnung (17) im Bereich des Vorkopfes (4) vorgesehen ist, und/oder
- dass die mindestens eine Einblasöffnung (17) oder mindestens eine Einblasöffnung (17) im Bereich einer Abzugsöffnung (13) vorgesehen ist, und/oder
- dass die mindestens eine Einblasöffnung (17) oder mindestens eine Einblasöffnung (17) im Bereich einer Trennwand zwischen Vorkopf (4) und dem Backraum (2) vorgesehen ist und/oder,
- dass die mindestens eine Einblasöffnung (17) oder mindestens eine Einblasöffnung (17) im Bereich des Backraums (2) vorgesehen ist.

4. Backvorrichtung (1) nach einem der Ansprüche 1 bis 3, **dadurch gekennzeichnet, dass** die Längsstrebe (10) ein Hohlprofil umfasst, wobei der Kühlkanal (11) im Hohlprofil angeordnet ist oder der Kühlkanal (11) durch den Innenraum des Hohlprofils gebildet ist.

5. Backvorrichtung (1) nach einem der Ansprüche 1 bis 4, **dadurch gekennzeichnet, dass** der Backraum (2) mit Ausnahme folgender Öffnungen im Wesentlichen geschlossen ausgebildet ist:
- eine Abzugsöffnung (13) zur Ableitung der gasförmigen Medien, insbesondere der Verbrennungsgase und der Luft, aus dem Backraum (2),
- eine oder mehrere Zuführungsöffnungen (14) für das Brenngemisch,
- eine Eintrittsöffnung (15) für die Backzangenkette (3),
- eine Austrittsöffnung (16) für die Backzangenkette (3),
- mindestens eine Konvektionsöffnung (12).

6. Backvorrichtung (1) nach einem der Ansprüche 1 bis 5, **dadurch gekennzeichnet, dass** über das Konvektionsgebläse (25) gesteuert und/oder geregelt Kühlluft zur Erzeugung künstlicher Konvektion in den Backraum (2) einbringbar ist, wobei die Kühlluft über Einblasöffnungen (17) in den Kühlkanal (11) eingebracht oder einbringbar ist.

7. Backvorrichtung (1) nach einem der Ansprüche 1 bis 6, **dadurch gekennzeichnet, dass** die Strömungsrichtung der aus der mindestens einen Konvektionsöffnung (12) des Kühlkanals (11) der mindestens einen Längsstrebe (10) austretenden Kühlluft gegen die Strömungsrichtung der in dem Kühlkanal (11) strömenden Kühlluft verläuft.

8. Backvorrichtung (1) nach einem der Ansprüche 1 bis 7, **dadurch gekennzeichnet, dass** die Längsstrebe (10) als Vertikalführungsschiene für Laufrollen und/oder dass die Längsstrebe (10) als Seitenführungsleiste für Seitenführungsrollen ausgebildet ist oder sind.

9. Backvorrichtung (1) nach einem der Ansprüche 1 bis 8, **dadurch gekennzeichnet, dass** die mindestens eine Längsstrebe (10) eine als Lauffläche für die Rollen (9) wirkende Laufschiene (18) umfasst.

10. Backvorrichtung (1) nach einem der Ansprüche 1 bis 9, **dadurch gekennzeichnet,**
- **dass** die mindestens eine Längsstrebe (10) am Backvorrichtungsgestell (21) angeordnet ist,
- und/oder dass die mindestens eine Längsstrebe (10) ein Teil des Backvorrichtungsgestells (21) ist.

11. Backvorrichtung (1) nach einem der Ansprüche 1 bis 10, **dadurch gekennzeichnet, dass** zur Verbindung der Längsstrebe (10) mit einem Teil des Backvorrichtungsgestells (21) eine erste Befestigungseinrichtung vorgesehen ist, wobei die Befestigungseinrichtung einen Fortsatz und eine Freistellung zur Befestigung des Fortsatzes umfasst.

12. Backvorrichtung (1) nach Anspruch 11, **dadurch gekennzeichnet, dass** das Backvorrichtungsgestell (21), insbesondere vertikal verlaufende, Stützen (22) umfasst und/oder aus, insbesondere vertikal verlaufenden, Stützen (22) gebildet ist und dass die mindestens eine Längsstrebe (10) über die mindestens eine Befestigungseinrichtung an diesen Stützen (22) befestigt oder befestigbar ist.

13. Backvorrichtung (1) nach einem der Ansprüche 1 bis 12, **dadurch gekennzeichnet, dass** die Umlaufbahn, entlang welcher die Backzangenkette (3) umläuft, nacheinander:
- eine obere im Wesentlichen waagrecht verlaufende Transportebene (23),
- einen hinteren Umlenkbereich im Bereich des hinteren Umlenkpunktes (6),
- eine untere im Wesentlichen waagrecht verlaufende Transportebene (24) und
- einen vorderen Umlenkbereich im Bereich des vorderen Umlenkpunktes (5) umfasst,
- dass die Backzangenkette (3) im hinteren Umlenkbereich durch Umlenkung um 180° von der oberen Transportebene (23) auf die untere Transportebene (24) geführt ist,
- dass die Backzangenkette (3) im vorderen Umlenkbereich durch Umlenkung um 180° von der unteren Transportebene (24) wieder zurück auf die obere Transportebene (23) geführt ist
- und dass die Transportebenen (23, 24) mindestens zwei Längsstreben (10) umfassen oder aus mindestens zwei Längsstreben (10) gebildet sind.

14. Backvorrichtung (1) nach einem der Ansprüche 1 bis 13, **dadurch gekennzeichnet, dass** die Längsstreben (10) aus festem Metall, insbesondere Stahl, besonders bevorzugt aus DIN2395 St44-3, ausgeführt sind.

15. Backvorrichtung (1) nach einem der Ansprüche 1 bis 14, **dadurch gekennzeichnet, dass** die Backzangen (8) der Backzangenkette (3) der Backvorrichtung (1) jeweils nacheinander:
- einen Backmassenauftragsbereich zum Auftrag einer Backmasse auf eine geöffnete Backzange (8),
- einen Schließbereich zum Schließen der Backzangen (8),
- den Backraum (2) zum Backen der Backprodukte in den geschlossenen Backzangen (8), in dem mindestens eine Heizanordnung (19) zur Beheizung der im Backraum (2) befindlichen Backzangen (8) vorgesehen ist,
- einen Öffenbereich zum Öffnen der Backzangen (8),
- und einen Backproduktentnahmebereich zur Entnahme der gebackenen Produkte aus den geöffneten Backzangen (8) durchlaufen,
wobei die Backzangenkette (3) an einem im Backraum (2) angeordneten hinteren Umlenkpunkt (6) und an einem entfernt vom Backraum (2) in einem Vorkopf (4) angeordneten vorderen Umlenkpunkt (5) umgelenkt sind, wobei der Backraum (2) als im Wesentlichen geschlossener Backraum (2) mit einer Wärmeisolierung ausgebildet ist.
